# EUROPEAN PATENT APPLICATION

(11) **EP 4 668 463 A1**
(43) Date of publication of application: **24.12.2025**
(21) Application number: 25184205.0
(22) Date of filing: 20.06.2025
(51) Int. Cl.: H01M 50/503, H01M 50/505, H01M 50/516, H01M 50/522, H01M 50/526, H01M 50/534, H01M 50/536, H01M 50/571

(54) **LEAD TAB WITH IMPROVED WELDING PERFORMANCE**

(30) Priority: 20.06.2024 KR 20240080230; 26.08.2024 KR 20240114637
(71) Applicant: Flexion Co., Ltd, Jeongeup-si, Jeollabuk-do 56137 (KR)
(72) Inventor: YU, Jinha, 56137 Jeollabuk-do (KR); NOH, Hyeongwan, 56137 Jeollabuk-do (KR); CHOI, Sunghoon, 56137 Jeollabuk-do (KR)
(74) Representative: Ter Meer Steinmeister & Partner

(57) **Abstract**

Another embodiment of the present invention provides a lead tab comprising: a metal substrate including copper; a nickel-plated layer disposed on both sides of the metal substrate; and a metal layer on the nickel-plated layer, wherein the metal layer comprises 70 to 99.9 wt% of chromium and wherein the lead tab has a welding strength of 48 kgf/mm² or more.

## Description

### CROSS-REFERENCE TO RELATED APPLICATIONS

This application claims the benefit of priority of the Korean Patent Application No. 10-2024-0080230 filed on June 20, 2024, and No. 10-2024-0114637 filed on August 26, 2024, which are hereby incorporated by reference as if fully set forth herein.

### BACKGROUND

### Field of the Invention

The present invention relates to a lead tab having improved welding performance.

### Discussion of the Related Art

The secondary battery industry is in the spotlight as a core component of IT devices along with semiconductors and displays. Recently, its use is increasing for electric bicycles, hybrid vehicles (HEVs), electric vehicles (EVs), plug-in hybrid vehicles (PHEVs), and energy storage systems (ESS) that use large-capacity batteries.

Typical secondary battery has a lead tab provided to extract electricity to the outside. In a secondary battery, one end of the lead tab is connected to the battery element and is pressed against the opposing film, and the other end protrudes to the outside of the film.

If a physical external force is applied to a secondary battery, the bonding strength of the welding area between the lead tabs and electrode tabs may weaken, causing some or all of them to be cut off. In this state, if a large amount of current flows in a short period of time, there is a risk of ignition or explosion as the battery heats up.

To solve these problems, research is continuously being conducted on lead tabs with improved welding performance.

### SUMMARY

The present invention relates to a lead tab with improved welding performance, which can prevent problems caused by the limitations and disadvantages of the related technologies as described above.

One embodiment of the present invention provides a lead tab comprising: a metal substrate including copper; a nickel-plated layer disposed on both sides of the metal substrate; and a metal layer on the nickel-plated layer, wherein the metal layer comprises 70 to 99.9 wt% of chromium and wherein the lead tab has a welding strength of 48 kgf/mm² or more.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view of a secondary battery according to one embodiment of the present invention.
FIG. 2 is a cross-sectional view of a lead tab according to one embodiment of the present invention.
FIG 3 is a cross-sectional view taken along line I-I' of FIG 1.

### DETAILED DESCRIPTION OF THE DISCLOSURE

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Accordingly, a first component described below may be a second component within the technical idea of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

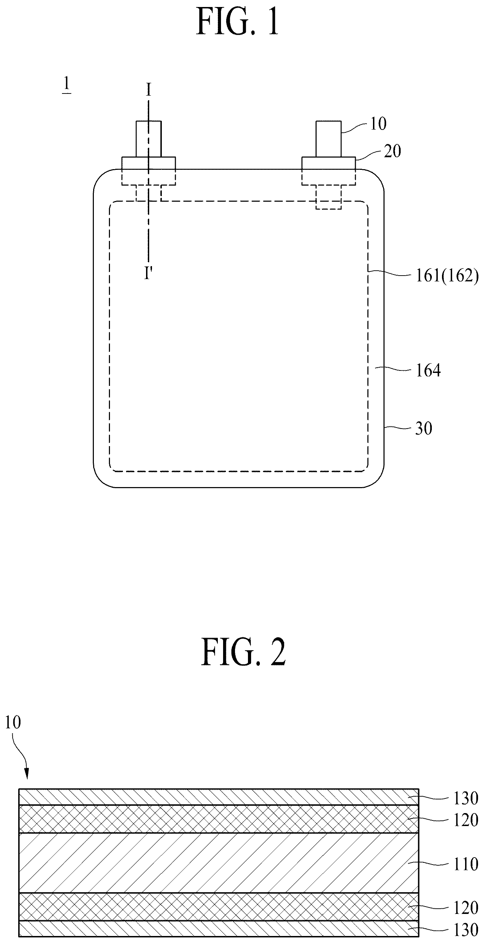

FIG. 1 is a perspective view of a secondary battery (1) according to one embodiment of the present invention.

FIG. 2 is a cross-sectional view of a lead tab (10) according to one embodiment of the present invention.

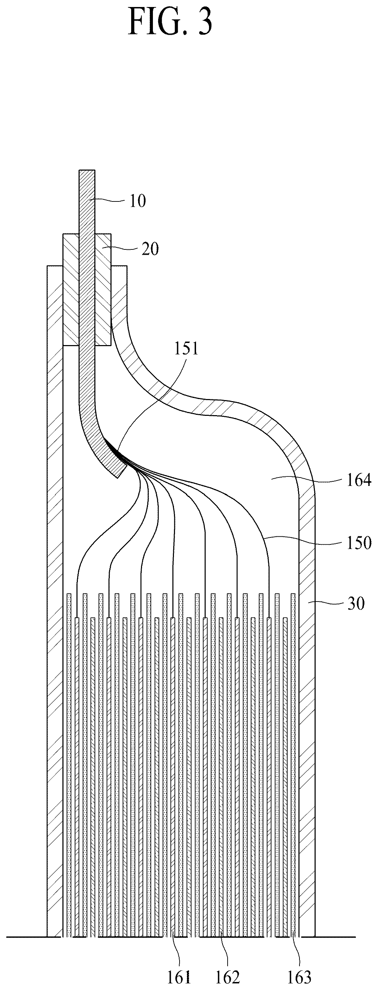

FIG 3 is a cross-sectional view taken along line I-I' of FIG 1.

There is no particular limitation on the type of secondary battery (1) according to one embodiment of the present invention, but it may preferably be a lithium secondary battery.

Referring to FIGS. 1 and 3, a secondary battery (1) according to one embodiment of the present invention is configured such that a film-shaped negative electrode (161) and a film-shaped positive electrode (162) are disposed in a state of being overlapped with each other via a separator (163), and an electrolyte (164) is disposed between the negative electrode (161) and the positive electrode (162) so as to enable charging and discharging by the transfer of lithium ions. The secondary battery (1) including the negative electrode (161), the positive electrode (162), and the electrolyte (164) is covered in a liquid-tight state by an outer case (30). Specifically, the negative electrode (161), the positive electrode (162), and the electrolyte (164) are sealed inside the outer case (30) to protect them from the outside. In addition, the negative electrode (161) is formed as a structure in which a secondary battery copper foil is used as an negative electrode collector and a negative electrode active material slurry is coated thereon. Likewise, the positive electrode (162) is formed with a structure in which a positive electrode active material slurry is coated on a positive electrode current collector such as aluminum.

In addition, although not shown in the drawing, the lead tab (10) may be composed of a negative lead tab and a positive lead tab. More specifically, the lead tab (10) disposed on the left side of Fig. 1 may be a negative lead tab, and the lead tab (10) disposed on the right side may be a positive lead tab.

Referring to Fig. 1, a sealing tape (20) is disposed on one side of the outer case (30) of the secondary battery (1). The sealing tape (20) is intended to further improve the adhesiveness between the lead tab (10) and the outer case (30). The sealing tape (20) is disposed on the lead tab (10), and a portion of the sealing tape (20) is in close contact with the inner surface of the outer case (30) to seal the outer case (30). The sealing tape (20) has a function of preventing leakage of a liquid such as an electrolyte (164) sealed inside the outer case (30). In addition, the sealing tape (20) is disposed between the lead tab (10) and the outer case (30) to secure insulation between the lead tab (10) and the outer case (30). A polypropylene film is used as the sealing tape (20). However, one embodiment of the present invention is not limited thereto, and may be formed of a polymer-based composite.

Referring to Fig. 1, one end of the lead tab (10) is connected to one of the positive electrode (161) and the negative electrode (162), and the other end of the lead tab (10) is exposed to the outside of the outer body (30).

As illustrated in FIG. 2, the lead tab (10) of the present invention includes a metal substrate (110) including copper (Cu), a nickel-plated layer (120) on the metal substrate (110), and a metal layer (130) on the nickel-plated layer (120). The metal substrate (110), the nickel-plated layer (120), and the metal layer (130) are described in detail below.

Referring to FIG. 3, a plurality of electrode tabs (150) protruding from a cathode (161) are integrally combined to form a pre-welding portion (151), and a lead tab (10) is electrically connected to the upper portion of the pre-welding portion (151) by welding.

For example, in the case of ultrasonic welding as a welding method, when ultrasonic vibration is applied, frictional heat causes plastic deformation, allowing the lead tab (10) to penetrate and closely adhere to the pre-welding portion (151), which is formed by integrally bonding the electrode tabs (150).

The material of the metal substrate (110) is not particularly limited, but may be formed of aluminum or copper. According to one embodiment of the present invention, the metal substrate (110) may be rolled copper foil.

According to one embodiment of the present invention, the metal substrate (110) may have a thickness of 100 to 1,000 µm. Preferably, it may have a thickness of 100 to 500 µm.

A nickel-plated layer (120) is disposed on a metal substrate (110).

According to one embodiment of the present invention, since the nickel-plated layer (120) includes nickel (Ni), the lead tab (10) according to the embodiment of the present invention has an antioxidation effect and can have an effect of preventing corrosion by hydrofluoric acid generated by the reaction between the electrolyte and moisture.

According to one embodiment of the present invention, the nickel-plated layer (120) may have a thickness of 0.5 to 10.0 µm.

On the other hand, when the nickel-plated layer (120) has a thickness of less than 0.5 µm, the nickel-plated layer (120) may be unevenly deposited. As a result, the metal layer (130) disposed on the nickel-plated layer (120) may also be unevenly deposited, causing the lead tab (10) including them to have non-uniform corrosion resistance.

In addition, when the nickel-plated layer (120) has a thickness exceeding 10.0 µm, the internal stress within the nickel-plated layer (120) increases, causing a problem of cracks forming. Based on this, the nickel-plated layer (120) according to the embodiment of the present invention needs to have a thickness of 0.5 to 10.0 µm.

As such, the corrosion resistance of the lead tab (10) can be significantly improved through the nickel-plated layer (120) having excellent corrosion resistance. At the same time, the adhesion between the metal substrate (110) and the metal layer (130) can be enhanced, thereby further improving the overall corrosion resistance and sealing performance.

According to one embodiment of the present invention, the lead tab (10) may further include a metal layer (130) on the nickel-plated layer (120).

The metal layer (130) contains 70.0 to 99.9 wt%(weight/weight) of chromium (Cr).

Specifically, the metal layer (130) can be formed by a dry vacuum process. For example, the metal layer (130) can be formed by any one of a sputtering process, an evaporation process, an ion plating process, and a CVD process as examples of the dry vacuum process. Preferably, the metal layer (130) can be formed by a sputtering process.

When a metal layer (130) is formed on a nickel-plated layer (120) by a dry vacuum process, some nickel (Ni) may be included within the metal layer (130). Even in this case, the metal layer (130) may include 70.0 wt% or more of chromium (Cr).

In general, the lead tab further includes a protective layer containing a chromium compound to improve corrosion resistance. At this time, the protective layer is formed through chromate treatment. However, the protective layer formed by the chromate treatment may have a very high oxygen fraction in the protective layer. At this time, the oxygen fraction means the ratio of oxygen to the total number of atoms in the protective layer. A protective layer with a very high oxygen fraction may cause the metal layer in contact with the protective layer to be excessively oxidized, thereby reducing the adhesion between the lead tab and the insulating film, and may cause the welding performance between the lead tab and the electrode tabs to deteriorate, thereby weakening the bonding strength at the welding area between the lead tab and the electrode tabs, which may cause part or all of the welding area to be cut off. In this state, if a large current flows in a short period of time, there is a risk of ignition or explosion as the battery is heated.

In addition, in the case of a protective layer formed by chromate treatment, some trivalent chromium (Cr³⁺) or hexavalent chromium (Cr⁶⁺) may exist within the protective layer. At this time, the hexavalent chromium (Cr⁶⁺) existing within the protective layer may have a strong oxidizing power. As a result, the metal layer in contact with the protective layer may be excessively oxidized, which may reduce the adhesion between the lead tab and the insulating film, and the welding performance between the lead tab and the electrode tabs may deteriorate, which may weaken the bonding strength of the welding area between the lead tab and the electrode tabs.

Therefore, according to one embodiment of the present invention, in order to increase the adhesion between the lead tab (10) and the sealing tape (20) and improve the welding performance between the lead tab (10) and the electrode tabs (150), the metal layer (130) needs to include 70.0 to 99.9 wt% of chromium (Cr).

According to one embodiment of the present invention, when the metal layer (130) is deposited by sputtering and contains 70.0 to 99.9 wt% of chromium (Cr), the oxygen fraction in the metal layer (130) is sufficiently reduced to achieve the purpose, thereby increasing the adhesion between the lead tab (10) and the sealing tape (20) and improving the welding performance between the lead tab (10) and the electrode tabs (150).

In addition, according to one embodiment of the present invention, when the metal layer (130) is deposited by a sputtering process and includes 70.0 to 99.9 wt% (w/w) of chromium (Cr), the influence of hexavalent chromium (Cr⁶⁺) in the metal layer (130) is reduced, so that the occurrence of human toxicity problems and environmental problems can be suppressed.

The lead tab (10) according to one embodiment of the present invention can have a welding strength of 48 kgf/mm² or more. The welding strength of the lead tab (10) is measured by welding the lead tab (10) and 30 sheets of copper foil that have been pre-welded, and then holding the welded lead tab (10) and 30 sheets of copper foil that have been pre-welded with a gripper, and then measuring the tensile strength. At this time, the welding strength means the measured tensile strength. The method of measuring the welding strength according to one embodiment of the present invention is described in detail below.

According to one embodiment of the present invention, when the lead tab (10) has a welding strength of 48 kgf/mm² or more, the bonding strength of the welding area between the lead tab and the electrode tabs is improved, so that the problem of part or all of welding area being cut off can be suppressed or prevented, and even if a large amount of current flows in a short period of time in this state, the risk of ignition or explosion can be reduced.

On the other hand, if the lead tab (10) has a welding strength of less than 48 kgf/mm², the bonding strength at the welding area between the lead tab and the electrode tabs may be reduced, causing a problem in which part or all of the welding area is cut off, and if a large amount of current flows in a short period of time in this state, there may be a risk of ignition or explosion as the battery heats up.

According to one embodiment of the present invention, the metal layer (130) may have a thickness of 10 to 500 nm.

When the metal layer (130) has a thickness of less than 10 nm, the metal layer (130) may be deposited unevenly, and as a result, when forming the secondary battery (1), the sealing tape (20) disposed on the metal layer (130) may be deposited unevenly, which may cause a problem in that the electrolyte (164) inside the secondary battery (1) may leak.

In addition, when the metal layer (130) exceeds a thickness of 500 nm, the internal stress within the metal layer (130) increases, causing a problem of cracks. Based on this, the metal layer (130) according to the embodiment of the present invention needs to have a thickness of 10 to 500 nm. Preferably, the metal layer (130) can have a thickness of 10 to 200 nm.

Below, a method for manufacturing a lead tab (10) according to one embodiment of the present invention is specifically described.

First, prepare a metal substrate (110).

The metal substrate (110) may have a thickness of 100 to 1,000 µm, and although the material is not particularly limited, it may be formed of aluminum or copper. According to one embodiment of the present invention, the metal substrate (110) may be rolled copper foil.

Next, a nickel-plated layer (120) is formed on the metal substrate (110). The nickel-plated layer (120) can be formed to have a thickness of 0.5 to 10.0 µm through an electroplating process using roll-to-roll equipment.

Below, the electroplating process of the present invention for forming a nickel-plated layer (120) is described in more detail.

The electroplating of the present invention is performed by passing the metal substrate (110) through an electrolyte.

According to the present invention, during the electroplating process, the electrolyte is maintained at 40 to 60° C. and pH 3.5 to 4.5. In addition, the plating solution contains 350 to 600 g/L of nickel sulfamate, 10 to 20 g/L of nickel chloride, 30 to 50 g/L of boric acid, and 0.01 to 0.02 g/L of a pitting inhibitor.

According to one embodiment of the present invention, the pitting inhibitor includes NS-AP (MKCAMENTEC Co., Ltd.).

The electroplating process can be performed at a speed of 2 to 3 m/min until the thickness of the nickel-plated layer (120) becomes 0.5 to 10.0 µm.

The current density applied during the electroplating process can be 5 to 12 A/dm².

The electroplating process may be a vertical process.

Next, a metal layer (130) can be formed on the nickel-plated layer (120) through a sputtering process using a DC sputtering device. The metal layer (130) can have a thickness of 10 to 500 nm.

At this time, chromium (Cr) metal is used as the target for sputtering.

Hereinafter, the present invention will be specifically described through examples and comparative examples. However, the following examples are only intended to help understanding the present invention, and the scope of the present invention is not limited to these examples.

### Example 1

After preparing a rolled copper foil as a metal substrate, a nickel-plated layer having a thickness of 2 *µ*m was formed on both sides of the metal substrate using an electroplating process. At this time, the electrolyte for forming the nickel-plated layers had a composition of 600 g/L of nickel sulfamate, 15 g/L of nickel chloride, 40 g/L of boric acid, and 0.02 g/L of a pitting inhibitor. The electrolyte temperature was set to 50°C, the pH was adjusted to 4.0, and the current density was set to 10 A/dm². The electroplating process was carried out at a line speed of 2.5 m/min.

At this time, NS-AP (MK Camentec) was used as a pitting inhibitor.

Next, a metal layer having a thickness of 20 nm was formed on the nickel-plated layer using a sputtering process, thereby completing a 300 µm lead tab. Chromium (Cr) metal was used as a target during the sputtering process.

### Example 2

lead tab was completed using the same method as Example 1, except that the concentration of nickel sulfamate in the electrolyte was 500 g/L when forming the nickel-plated layer.

### Example 3

A lead tab was completed using the same method as Example 1, except that the concentration of nickel chloride in the electrolyte was 20 g/L when forming the nickel-plated layer.

### Example 4

A lead tab was completed using the same method as Example 1, except that the concentration of boric acid in the electrolyte was 35 g/L when forming the nickel-plated layer.

### Example 5

A lead tab was completed using the same method as Example 1, except that the concentration of the pitting inhibitor in the electrolyte was 0.15 g/L when forming the nickel-plated layer.

### Comparative Example 1

After preparing a rolled copper foil as the metal substrate, nickel-plated layers with a thickness of 2 µm were formed on both sides of the metal substrate using an electroplating process. In this process, the electrolyte for forming the nickel-plated layers contained 600 g/L of nickel sulfamate, 15 g/L of nickel chloride, 40 g/L of boric acid, and 0.02 g/L of a pitting inhibitor. The electrolyte temperature was set to 50°C, the pH was adjusted to 4.0, and the current density was maintained at 10 A/dm². The electroplating process was carried out at a line speed of 2.5 m/min.

At this time, NS-AP (MK Camentec) was used as a pitting inhibitor.

Next, a metal substrate having nickel-plated layers formed on both sides was immersed in a 0.06 M chromate solution at room temperature for 20 seconds, dried at room temperature for 10 seconds, rinsed with distilled water for 10 seconds, immersed in a 0.06 M chromate solution at room temperature for 10 seconds, dried at room temperature for 10 seconds, rinsed with distilled water for 10 seconds, and dried for 15 seconds to form a protective layer having a thickness of 20 nm. Except for this step, the lead tab having a thickness of 300 µm was prepared using the same method as in Example 1.

### Comparative Example 2

A lead tab was completed using the same method as Comparative Example 1, except that the concentration of nickel sulfamate in the electrolyte was 500 g/L when forming the nickel-plated layer.

### Comparative Example 3

A lead tab was completed using the same method as Comparative Example 1, except that the concentration of nickel chloride in the electrolyte was 20 g/L when forming the nickel-plated layer.

### Comparative Example 4

A lead tab was completed using the same method as Comparative Example 1, except that the concentration of boric acid in the electrolyte was 35 g/L when forming the nickel-plated layer.

### Comparative Example 5

A lead tab was completed using the same method as Comparative Example 1, except that the concentration of the pitting inhibitor in the electrolyte was 0.15 g/L when forming the nickel-plated layer.

The welding strength of the lead tab depending on whether the metal layer was formed by the sputtering process in the above Examples 1 to 5 and Comparative Examples 1 to 5 is as shown in Table 1 below.

**[Table 1]**

| | Whether the metal layer is formed by a sputtering process | welding strength (kgf/mm²) |
|---|---|---|
| Example 1 | O | 55.65 |
| Example 2 | O | 62.37 |
| Example 3 | O | 92.38 |
| Example 4 | O | 71.68 |
| Example 5 | O | 48.46 |
| Comparative Example 1 | X | 37.73 |
| Comparative Example 2 | X | 18.10 |
| Comparative Example 3 | X | 25.98 |
| Comparative Example 4 | X | 47.38 |
| Comparative Example 5 | X | 40.55 |

### i) Welding strength measurement

Samples of the lead tabs prepared in Examples 1 to 5 and Comparative Examples 1 to 5 were ultrasonically welded (second ultrasonic welding step) with 30 sheets of copper foil that have been pre-welded, and then the tensile strength was measured.

At this time, the sample of the lead tab is cut to a size of 45 mm x 43 mm (width: 45 mm, length: 43 mm) from the lead tab manufactured in Examples 1 to 5 and Comparative Examples 1 to 5 and formed to have a thickness of 300 µm.

Each of the 30 sheets of copper foil has a size of 50 mm × 50 mm (width: 50 mm, length: 50 mm), a thickness of 10 µm, and is made of copper (Cu). The 30 sheets of copper foil are stacked and then ultrasonically welded (first ultrasonic welding step) to form the 30 sheets of copper foil that have been pre-welded.

### <First ultrasonic welding step conditions>

Welding area: An area of 45 mm x 6 mm (width: 45 mm, length: 6 mm), specifically, the welding area is located on one side of the copper foil.
Welding energy: 700 J
Ultrasonic Welder: US-3620SLS from Tech-SONIC

### <Second ultrasonic welding step conditions>

Welding area: An area of 30 mm x 6 mm (width: 30 mm, length: 6 mm), specifically, the welding area is disposed on one side of the 30 sheets of copper foil that have been pre-welded.
Welding energy: 2400 W
Ultrasonic Welder: US-3620SLS from Tech-SONIC

### <Tensile strength measurement conditions>

Tensile strength was measured on welded lead tab samples and the 30 sheets of copper foil that have been pre-welded. In detail, the tensile strength is measured for samples in which the lead tab samples and the 30 sheets of copper foil that have been pre-welded are welded together.

Tensile strength can be measured by a universal testing machine (UTM) of ORIENTAL TM Co., Ltd. OTT-00. At this time, the lead tab sample is fixed to the lower jig of the UTM, and the 30 sheets of copper foil that have been pre-welded are fixed to the upper jig, and the tensile strength is evaluated.
Angle: 180°
Peeling speed: 30 mm/min
Referring to Table 1, the following results can be confirmed.

In the case of the lead tabs of Examples 1 to 5 in which a metal layer was formed on a nickel-plated layer by a sputtering process, it can be seen that the welding strength is 48 kgf/mm² or more.

On the other hand, in the case of the lead tabs of Comparative Examples 1 to 5 in which a protective layer was formed on the nickel-plated layer through chromate treatment without forming a metal layer by a sputtering process, it can be seen that the welding strength is less than 48 kgf/mm².

In addition to the effects mentioned above, other features and advantages of the present invention are described below or may be clearly understood by those skilled in the art to which the present invention pertains from such description and explanation.

According to the present invention, a lead tab with improved welding performance can be provided.

It will be apparent to those skilled in the art that the present disclosure described above is not limited by the above-described embodiments and the accompanying drawings and that various substitutions, modifications and variations can be made in the present disclosure without departing from the scope of the disclosures. Consequently, the scope of the present disclosure is defined by the accompanying claims and it is intended that all variations or modifications derived from the meaning, scope and equivalent concept of the claims fall within the scope of the present disclosure.

## Claims

1. A lead tab comprising:
a metal substrate including copper;
a nickel-plated layer disposed on both sides of the metal substrate; and
a metal layer on the nickel-plated layer,
wherein the metal layer comprises 70 to 99.9 wt% of chromium and
wherein the lead tab has a welding strength of 48 kgf/mm² or more or 470 MPa or more.

2. The lead tab of claim 1, wherein the metal substrate is a rolled copper foil.

3. The lead tab of claim 1 or 2, wherein the metal substrate has a thickness of 100 to 1,000 µm.

4. The lead tab according to any one of the preceding claims, wherein the nickel-plated layer has a thickness of 0.5 to 10.0 µm.

5. The lead tab according to any one of the preceding claims, wherein the metal layer has a thickness of 10 to 500 nm.

6. The lead tab according to any one of the preceding claims, wherein the metal layer is formed by a dry vacuum process.

7. The lead tab of claim 6, wherein the dry vacuum process comprises at least one of a sputtering process, an evaporation process, an ion plating process, and a CVD process.

8. A secondary battery comprising the lead tab of any one of claims 1 to 7.
